## Europäisches Patentamt

## European Patent Office

## Office européen des brevets

(19)

(11) **EP 0 601 321 B1**

(12) **EUROPÄISCHE PATENTSCHRIFT**

(45) Veröffentlichungstag und Bekanntmachung des Hinweises auf die Patenterteilung:
**19.02.1997 Patentblatt 1997/08**

(51) Int Cl.⁶: **C09D 5/44**

(21) Anmeldenummer: 93117364.5

(22) Anmeldetag: **27.10.1993**

(54) **Bindenmittelzubereitung für die Elektrotauchlackierung**

Binders composition for electrodeposition

Composition de liants pour l'électrodéposition

(84) Benannte Vertragsstaaten:
**BE DE ES FR GB IT NL**

(30) Priorität: **20.11.1992 DE 4239078**

(43) Veröffentlichungstag der Anmeldung:
**15.06.1994 Patentblatt 1994/24**

(73) Patentinhaber: **BASF Lacke + Farben AG**
**48165 Münster-Hiltrup (DE)**

(72) Erfinder:
• **Hoffmann, Gerhard, Dr.**
  **D-67166 Otterstadt (DE)**
• **Huemke, Klaus, Dr.**
  **D-67159 Friedelsheim (DE)**
• **Faul, Dieter, Dr.**
  **D-67098 Bad Duerkheim (DE)**

(56) Entgegenhaltungen:
**EP-A- 0 301 293          EP-A- 0 461 566**

**Beschreibung**

Die vorliegende Erfindung betrifft eine Bindemittelzubereitung für die Elektrotauchlackierung, enthaltend

(A) ein kathodisch abscheidbares Kunstharz und

(B) 0,5 bis 15 Gew.-%, bezogen auf (A), einer Verbindung mit einem Siedepunkt oberhalb von 140°C, welche mindestens eine Vinyl- oder Allylgruppe trägt, die nicht direkt an eine Carbonylgruppe gebunden ist.

Weiterhin betrifft die Erfindung wäßrige Dispersionen solcher Bindemittelzubereitungen und deren Verwendung in Elektrotauchbädern.

Die Synthese von polymeren Bindemitteln für die Elektrotauchlackierung wird üblicherweise in Lösungsmitteln durchgeführt, um während des Polymeraufbaus die Viskosität so begrenzen zu können, daß eine Rührfähigkeit des Reaktionsgemisches gewährleistet ist. Als Lösungsmittel werden niedrigsiedende mit Siedepunkten im Bereich von 130 bis 160°C wie Isobutanol oder Hochsieder wie beispielsweise Propylenglykolmonophenylether eingesetzt. Die Lösungsmittel müssen in einem nachgeschalteten Prozeß aufwendig entfernt werden, was bei Niedrigsiedern weitgehend, bis auf Restgehalte von 1 bis 5 Gew.-%. noch gelingt, während Hochsieder fast vollständig in der Bindemitteldispersion verbleiben.

Die verbleibenden Lösungsmittel üben zwar beim Einbrennen einen positiven Einfluß auf den Verlauf aus, werden jedoch bei der Bestimmung des VOC-Wertes (VOC = volatile organic content) mit erfasst. Dieser VOC-Wert kann nach der folgenden Formel berechnet werden:

$$\frac{100 \text{ g Lack - g FK - g Wasser}}{\dfrac{100 \text{ g Lack}}{\text{Dichte Lack}} - \dfrac{\text{g Wasser}}{\text{Dichte Wasser}}} \times 1000 = \text{VOC g/l}$$

Die Berechnung und Bestimmung wird für einen frisch angesetzten Elektrotauchlack durchgeführt. Die Festkörperbestimmung (FK) erfolgt nach ASTM-D 2369, der Lösungsmittelgehalt wird gaschromatographisch ermittelt, der Wassergehalt entweder gaschromatographisch oder nach der Karl-Fischer-Methode.

Wegen des gestiegenen Umweltbewußtseins versucht man jedoch weitgehend lösungsmittelfreie Elektrotauchlackierbäder zu entwickeln, deren VOC-Wert möglichst niedrig ist.

Es hat verschiedene Versuche gegeben, vor allem die hochsiedenden Lösungsmittel durch viskositätsmindernde Substanzen zu ersetzen, die während der Abscheidung und der Einbrennung die Funktion indifferenter Lösungsmittel übernehmen können, aber nicht zum VOC-Wert beitragen.

So wird in der US-A 3 975 251 der Zusatz von niedermolekularen Di-(meth)acrylaten beschrieben, die zunächst als Reaktivverdünner dienen, dann aber während des Einbrennens miteinander unter Ausbildung eines interpenetrierenden Netzwerkes reagieren.

Aus der DE-OS 2 752 255 ist der Zusatz von (meth)acrylatfunktionellen Urethanen in kathodischen Tauchlacken bekannt, wobei durch diesen Zusatz der Viskositäts- und Härtungsverlauf günstig beeinflußt werden soll.

Durch die Verwendung von Acrylaten handelt man sich jedoch Nachteile bezüglich der Lagerstabilität der Tauchlacke, der Decklackhaftung und des Korrosionsschutzes ein.

In der US-A 4 740 532 werden Bindemittelmischungen für Isolierbeschichtungen beschrieben, welche Reaktivverdünner wie Diallylphthalat zur Plastifizierung enthalten.

Aus den japanischen Schriften JP 84-202 627 und JP 61 078 843 sind Laminate für gedruckte Schaltungen bekannt, die aus Epoxidharzen, Reaktivverdünnern wie beispielsweise Diallylphthalat und Aminen zur Härtung bestehen.

Aufgabe der vorliegenden Erfindung war es, Bindemittelzubereitungen für die kathodische Elektrotauchlackierung zu finden, welche deutlich verringerte Lösungsmittelgehalte aufweisen.

Demgemäß wurden die eingangs definierten Bindemittelzubereitungen gefunden.

Komponente (A):

Die erfindungsgemäß eingesetzten Elektrotauchbäder können prinzipiell alle für die Herstellung von Elektrotauchbädern geeigneten kathodisch abscheidbaren fremd- oder selbstvernetzenden Kunstharze enthalten. Als solche Kunstharze kommen Polymerisations-, Polykondensations- oder Polyadditionsprodukte, bevorzugt solche mit einem mittleren Molekulargewicht $\overline{M}_w$, meßbar in üblicher Weise mittels Gelpermeationschromatographie, von 350 - 20.000, insbesondere 1.000 bis 15.000, speziell 2.000 - 15.000, in Betracht, die durch Protonieren mit Säure in Wasser dispergiert werden können. Solche Produkte weisen funktionelle Gruppen auf, die durch Protonieren zu hydrophilen Gruppen wie Ammonium-, Phosphonium- oder Sulfoniumgruppen werden.

Vorteilhaft können aber auf diesem technischen Gebiet bekannte primäre und/oder sekundäre Hydroxylgruppen und primäre und/oder tertiäre Aminogruppen enthaltende Polymerisations-, Polykondensations- und Polyadditionsprodukte, wie Amino-Epoxidharze, Amino-Poly(meth)acrylatharze und/oder Amino-Polyurethanharze verwendet werden. Der Einsatz von Amino-Epoxidharzen wird für Grundierungen mit hohem Korrosionsschutzniveau bevorzugt. Die Aminoharze weisen vorteilhaft Aminzahlen von 30 bis 150 auf. Die untere Grenze der Aminzahl sollte bei 35, bevorzugt 50, die obere Grenze sollte bei 120, bevorzugt bei 100, liegen.

Geeignete Amino-Epoxidharze sind Umsetzungsprodukte von epoxidgruppenhaltigen Harzen mit vorzugsweise endständigen Epoxidgruppen mit gesättigten und/oder ungesättigten sekundären und/oder primären Alkyl- oder Arylaminen bzw. Aminoalkoholen mit bis zu 30 C-Atomen. Diese können am Aryl- oder Alkylrest durch mindestens eine primäre und/oder sekundäre Hydroxylgruppe, durch die Mono- oder Dialkylaminogruppe mit bis zu 12 C-Atomen und/oder durch eine primäre Aminogruppe, die durch Ketiminisierung vorübergehend geschützt wird, modifiziert sein.

Als Epoxidharze können beliebige Materialien verwendet werden, sofern sie ein mittleres Molekulargewicht von 300 bis 6000 und im Mittel 1,0 bis 3,0 Epoxidgruppen pro Molekül enthalten, vorzugsweise Verbindungen mit 2 Epoxidgruppen pro Molekül. Bevorzugt sind Epoxidharze mit mittleren Molekulargewichten von 350 bis 5000, insbesondere 350 bis 2000. Besonders bevorzugte Epoxidharze sind z.B. Glycidylether von im Mittel mindestens zwei phenolische Hydroxylgruppen im Molekül enthaltenden Polyphenolen, die sich in üblicher Weise durch Veretherung mit einem Epihalohydrin in Gegenwart von Alkali herstellen lassen. Aromatische Polyepoxide mit einem höheren Epoxidäquivalentgewicht können aus solchen mit einem niedrigen Epoxidäquivalentgewicht und Polyphenolen hergestellt werden oder aber durch geeignete Wahl des Verhältnisses von phenolische OH-Gruppen zu Epihalohydrin.

Das Einführen von Aminogruppen kann in einer der üblichen Reaktionen erfolgen, wie sie dem Fachmann geläufig sind und beispielsweise in EP 134 983, EP 165 556 oder EP 166 314 beschrieben sind.

Die Herstellung von (A) erfolgt unter an sich üblichen Bedingungen, allerdings ohne Verwendung von üblichen Lösungsmitteln. Statt dessen wird zu Beginn der Herstellung von (A) die Komponente (B), beziehungsweise Gemische aus Komponente (B) zu dem Reaktionsgemisch gegeben, um eine ausreichende Rührbarkeit zu gewährleisten.

Komponente (B):

Als Komponenten (B) kommen Verbindungen mit einem Siedepunkt oberhalb von 140°C in Betracht, welche mindestens eine Allyl- oder Vinylgruppe enthalten, die nicht direkt an eine Carbonylgruppe gebunden ist.

Geeignete Verbindungen weisen Viskositäten im Bereich von 2 bis 40, vorzugsweise von 2 bis 20 mPa·s (20°C) auf.

Als Verbindungen (B) kommen allyl- oder vinylsubstituierte Ether-, Ester- oder Amidverbindungen in Betracht, wobei die Allyl- oder Vinylgruppen als Allyl- oder Vinylether, Allyl- oder Vinylester bzw. als entsprechende Amide vorliegen können oder aber an anderen Stellen des Moleküls gebunden sein können, mit der erwähnten Einschränkung, daß sie nicht in $\alpha$-Position einer Carbonylgruppe gebunden sind, also nicht Teil eines Acrylatsystems sind. Die Ether-, Ester- oder Amidverbindungen können aromatisch oder aliphatisch sein, wobei auch heterocyclische Verbindungen in Betracht kommen.

Geeignete Allylverbindungen sind beispielsweise aromatische Ester wie Diallylphthalat, Trimellithsäurediallylester oder Trimellithsäuretriallylester.

Weiterhin eignen sich der Diallylester der Kohlensäure oder Diallylmalonsäurediethylester.

Ebenso eignen sich allylsubstituierte Triazinderivate wie 2,4,6-Tri-allyloxi-1,3,5-triazin oder 1,3,5-Triallyl-1,3,5-triazacyclohexan-2,4,6-trion.

Weiterhin eignen sich Derivate der 2-Pyrrolidon-4-carbonsäure wie N-Allyl-2-pyrrolidon-4-carbonsäureallylester, N-Methyl-2-pyrrolidon-4-carbonsäureallylester oder N-Allyl-2-pyrrolidon-4-carbonsäuremethylester.

Eine Esterverbindung kann in diesem Sinne ein Ester der Carbaminsäure, also ein Urethan, sein, wie beispielsweise Diallyl-1,6-hexamethylen-diurethan sein.

Weiterhin kann man Poly-tetrahydrofuran-diallylether mit mittleren Molekulargewichten $\overline{M}_n$ im Bereich von 200 bis 2000 einsetzen.

Als geeignete Vinylverbindungen kommen Vinylether wie Diethylenglykolmonovinylether, 2-Diethylaminoethylvinylether, Triethylenglykolmethylvinylether, Dodecylvinylether oder der Mono- bzw. Divinylether des 1,4-Bis(hydroxymethyl)cyclohexans. Weiterhin eignet sich Vinyldioxolan.

Die Komponenten (B) sind unter den Reaktionsbedingungen der Herstellung des Kunstharzes (A) sowie beim Abscheiden reaktionsträge, so daß sie weder mit dem Kunstharz noch mit sich selbst reagieren. Besonders bevorzugt werden als Komponenten (B) Diallylphthalat, Diethylenglykolmonovinylether oder Cyclohexandimethanolmonovinylether eingesetzt.

Die Komponenten (B) werden in solchen Mengen zu dem Reaktionsgemisch gegeben, daß die fertige Bindemittelzubereitung 0,5 bis 15 Gew.-%, vorzugsweise 2 bis 8 Gew.-%, bezogen auf die Menge von (A), an (B) enthält.

Die fertige Bindemittelzubereitung kann auf an sich übliche Weise durch Protonieren mit einer Säure in eine wäßrige Dispersion überführt werden. Als Säuren kommen Phosphorsäure, bevorzugt jedoch organische Säuren wie Ameisensäure, Essigsäure, Propionsäure oder Milchsäure in Betracht. Es ist auch möglich, das Kunstharz in ein Wasser/Säure-Gemisch zu geben. Die wäßrigen Dispersionen der Bindemittelzubereitung werden üblicherweise auf einen Festkörpergehalt im Bereich von 25 bis 40 Gew.-% eingestellt.

In einer bevorzugten Ausführungsform enthält die Bindemittelzubereitung noch 0,2 bis 4 Gew.-%, vorzugsweise 0,8 bis 2 Gew.-%, eines Radikalstarters mit einer Zerfallstemperatur oberhalb von 85°C. Geeignete Radikalstarter sind beispielsweise Dicumylperoxid, t-Butylperbenzoat, t-Butylperoctoat und weitere dem Fachmann bekannte Verbindungen.

Der Radikalstarter kann der Komponenten (B) vor dem Einbringen in das Reaktionsgemisch bei der Bindemittelherstellung zugemischt oder direkt in das Reaktionsgemisch eingebracht werden. Es ist auch möglich, den Radikalstarter vor der Dispergierung zu der Bindemittelzubereitung zu geben.

Beim Einbrennen können sich durch Zugabe des Starters interpenetrierende Netzwerke ausbilden, was zu einer erhöhten Stabilität des Lackfilms führt.

Sofern die kathodisch abscheidbaren Kunstharze keine selbstvernetzenden Gruppen tragen, werden üblicherweise Vernetzer zugesetzt.

Als Vernetzer können für dieses technische Gebiet übliche Vernetzer eingesetzt werden.

Es handelt sich im allgemeinen um eine mindestens bifunktionelle monomere oder polymere Verbindung, die in der Wärme über Kondensations- oder Additionsreaktionen vernetzend wirkt. Es versteht sich von selbst, daß diese von A und B verschieden ist.

Geeignete Vernetzer sind z.B. Aminoplastharze wie Harnstoff-, Formaldehyd-Harze, Melaminharze oder Benzoguanaminharze, geblockte oder verkappte Isocyanatvernetzer, wie sie beispielsweise aus EP-A 261 385 bekannt sind, über Esteraminolyse und/oder Umesterung härtende Vernetzer, z.B. β-Hydroxyalkylester-Vernetzer gemäß der EP 40 867 und Carbalkoxymethylester-Vernetzer gemäß der DE 32 33 139. Weitere mögliche Vernetzer sind phenolische Mannich-Basen, wie sie z.B. in der DE 34 22 457 beschrieben sind.

Geblockte Polyisocyanate werden dadurch hergestellt, daß man ein multifunktionelles Isocyanat mindestens mit einer stöchiometrischen Menge an einer monofunktionellen, aktiven Wasserstoff (Zerewitinoff-Reaktion) enthaltenden Verbindung umsetzt, wobei gegebenenfalls basische Katalysatoren wie tert.-Amine oder geringe Mengen an Zinnsalzen wie Dibutylzinndilaurat zugegeben werden können. Die Isocyanatgruppe wird auf diese Weise bei Raumtemperatur gegen Reaktionen mit Wasser oder Alkoholen geschützt. Das erhaltene Reaktionsprodukt setzt sich üblicherweise beim Erwärmen mit den aktiven Wasserstoffatomen der Komponenten A um, wobei die Schutzgruppe wieder abgespalten wird. Sie spaltet sich bei Einbrenntemperaturen von weniger als 210°C, vorzugsweise weniger als 190°C, besonders unter 180°C, andererseits über 100°C, vorzugsweise über 140°C, besonders bevorzugt über 150°C, wieder ab. Mittel, die die Isocyanate blockieren, enthalten nur eine einzige Amin-, Amid-, Lactam-, Thio- oder Hydroxylgruppe. So haben sich beispielsweise bewährt aliphatische oder cycloaliphatische Amine wie Dibutylamin, aliphatische oder cycloaliphatische Alkohole wie 2-Ethylhexanol, Dialkylaminoalkohol wie Dimethylaminoethanol, Oxime wie Methylethylketoxim, Lactame wie ε-Caprolactam oder Pyrrolidon-2, Imide wie Phthalimid oder N-Hydroxy-maleinimid, Hydroxyalkylester, Malonsäure oder Acetessigsäureester. Es werden aber auch β-Hydroxyglykole oder -glykolether und Glykolamide empfohlen. Besonders gute Ergebnisse werden mit Diallylamin, Ethylenglykolmonovinylether und ähnlichen Allyl- oder Vinylderivaten erzielt.

Vorzugsweise werden geblockte Di- oder Polyisocyanate wie geblocktes Isophorondiisocyanat, Toluylendiisocyanat, Diphenylmethandiisocyanat oder Hexamethylendiisocyanat verwendet.

Zur Verwendung als Elektrotauchbäder werden den wäßrigen Bindemitteldispersionen noch Pigmentpasten und übliche Hilfsmittel zugesetzt.

Pigmentpasten sind beispielsweise aus einem Reibharz und Pigmenten wie Titandioxid, Ruß oder Aluminiumsilikaten sowie Hilfs- und Dispergiermitteln erhältlich. Geeignete Reibharze sind beispielsweise in der EP-A 107 089 oder der EP-A 251 772 beschrieben.

Die Abscheidung der Lackfilme bei der kathodischen Elektrotauchlackierung erfolgt üblicherweise bei 20 bis 35°C, vorzugsweise 25 bis 32°C, während 5 bis 500 sec, vorzugsweise 60 bis 300 sec bei Abscheidespannungen von 50 bis 500 V. Der zu beschichtende Gegenstand wird als Kathode geschaltet.

Anschließend können die abgeschiedenen Naßfilme bei Temperaturen im Bereich von 120 bis 210°C, vorzugsweise 140 bis 180°C, eingebrannt werden.

Elektrotauchbäder, die die erfindungsgemäßen Bindemittelzubereitungen enthalten, weisen günstige VOC-Werte und vorteilhafte Teilchengrößen der Dispersionsteilchen auf, d.h. die Dispersionen sind sehr stabil gegen Koagulation. Lackfilme, die aus diesen Tauchbädern abgeschieden werden, zeigen einen günstigen Verlauf und somit glatte Oberflächen. Die eingebrannten Filme weisen eine hohe mechanische Stabilität und ein gutes Korrosionsschutzverhalten auf.

Die erfindungsgemäßen Bindemittelzubereitungen können auch für andere Beschichtungen als Elektrotauchbeschichtungen eingesetzt werden.

Herstellung eines Kunstharzes A

Beispiele 1 bis 5, Vergleichsbeispiele A und B

Allgemeine Vorschrift

In einem Reaktor wurden unter Stickstoffatmosphäre 43,73 kg eines Epoxidharzes auf Basis von Bisphenol A mit einem Epoxidequivalentgewicht (EEW) von 188, 8,84 kg Bisphenol A, 10,16 kg Dodecylphenol und 3,08 kg Xylol vorgelegt und diese Mischung auf 130°C erhitzt. Dann wurden 0,06 kg Triphenylphosphin zugegeben, worauf die Temperatur auf 160°C anstieg. Nachdem die Temperatur wieder auf 130°C abgefallen war, wurden 0,16 kg N,N-Dimethylaminobenzylamin zugegeben und das Reaktionsgemisch für ca. 2 Stunden auf 130°C gehalten, bis ein Produkt mit einem EEW von 810 erhalten wurde. Unter Kühlung wurden nun 3,50 kg einer Komponente (B) (Beispiele 1 bis 5, s. Tabelle I) zugegeben. Im Falle des Vergleichsbeispiels A wurden statt einer Komponente (B) 3,50 kg Butylglykol zugegeben, im Falle des Vergleichsbeispiels B stattdessen 3,50 kg 2-Hydroxyethylacrylat. Weiterhin wurden 5,30 kg Diethanolamin und 8,13 kg Xylol zugegeben und die Reaktionsmischung eine Stunde bei 90°C gehalten. Sodann wurden unter Kühlung 11,57 kg Isopropanol und weitere 3,5 kg Komponente (B) bzw. im Falle des Vergleichsbeispiels A 3,5 kg Butylglykol bzw. im Falle des Vergleichsbeispiels B 3,5 kg 2-Hydroxyethylacrylat zugegeben und das Reaktionsgemisch noch 2 Stunden bei 60°C gehalten. Anschließend wurde das Reaktionsgemisch auf 90°C erhitzt und noch eine Stunde bei dieser Temperatur gehalten, bis die Viskosität der Mischung konstant blieb. Das Harz wies einen Festkörpergehalt von 70,2 Gew.-% auf (Bestimmung durch einstündiges Trocknen bei 130°C). Die Eigenschaften der so erhaltenen Harze sind in Tabelle I aufgelistet.

Tabelle I

| Beisp. Nr. | Komponente (B) | Komponente (C) | Viskosität (23°) [mPa·s][3] | Aminzahl [mg KOH/g] | Teilchengröße [1] [mm] |
|---|---|---|---|---|---|
| 1 | Diallylphthalat | – | 280 | 55 | 85 |
| 2 | Diallylphthalat | t-Butylperoctoat | 280 | 55 | 95 |
| 3 | Diallylphthalat | t-Butylperbenzoat | 280 | 56 | 105 |
| 4 | Ethylenglykolmono-novinylether | t-Butylperoctoat | 210 | 55 | 90 |
| 5 | Cyclohexandi-methanolmono-vinylether | t-Butylperoctoat | 230 | 55 | 96 |
| Vgl.bsp. A | – | – | 250 | 55 | 140 |
| Vgl.bsp. B | – | – | 320 | 55 | 125 [2] 365 |

[1] in der wäßrigen Dispersion

[2] bimodal

[3] 40 gew.-%ige Lösung des Harzes in 1-Methoxypropanol-2

EP 0 601 321 B1

Herstellung des Vernetzers

3 mol (522,5 g) Toluylendiisocyanat wurden zunächst mit 1 mol (134,2 g) Trimethylolpropan bei 70°C umgesetzt. Die nicht abreagierten Isocyanatgruppen wurden anschließend durch Umsetzung mit 3 mol (312,4 g) n-Propylglykol verkappt. Die Reaktion wurde in 250 g Methylisobutylketon durchgeführt.

Der Festkörpergehalt der Vernetzerlösung wurde mit Methylisobutylketon auf 72 Gew.-% eingestellt. Die Viskosität einer 55 gew.-%igen Lösung in 1-Methoxypropanol-2 bei 25°C betrug 240 mPa·s.

Herstellung der wäßrigen Bindemitteldispersionen

Allgemeine Vorschrift

1040 g eines Harzes gemäß den Beispielen 1 bis 5, 560 g des Vernetzers, 41 g Milchsäure und 2 g einer 50 gew.-%igen Lösung in n-Butylglykol eines handelsüblichen Entschäumers (Surfynol® der Fa. Air Products) bei Raumtemperatur gemischt. Zu der homogenen Mischung wurden unter Rühren 597 g deionisiertes Wasser in Portionen von 199 g zugegeben. Anschließend wurde 30 min lang gerührt, sodann 960 g deionisiertes Wasser innerhalb einer Stunde zugetropft und noch einmal 30 min lang gerührt. Anschließend wurde in einer Vakuumdestillation bei 45°C und 80 mbar die flüchtigen Lösungsmittel (Isobutanol, Xylol, Methylisobutylketon) entfernt und durch soviel deionisiertes Wasser ersetzt, daß der Festkörpergehalt der stabilen Dispersionen bei 34,8 Gew.-% lag. Die Teilchengrößen der Dispersionsteilchen sind in Tabelle I aufgelistet.

Herstellung der Pigmentpaste

Eine Mischung aus 27,81 kg Bisphenol-A-diglycidylether, 1,44 kg Xylol und 5,81 kg Bisphenol A wurde in Gegenwart von 0,002 kg Triphenylphosphin bei ca. 150°C umgesetzt, bis ein Produkt mit einem EEW von 345 erhalten wurde. Das Reaktionsgemisch wurde mit 21,61 kg n-Butylglykol verdünnt und auf 54°C abgekühlt. Dann wurde eine Mischung aus 7,77 kg 9-Amino-3,6-dioxanonan-1-ol und 4,07 kg N,N-Dimethylaminopropylamin innerhalb von 6 min zugegeben, worauf die Temperatur des Reaktionsgemisches auf 110°C stieg. Die Mischung wurde eine Stunde lang bei 110 bis 115°C gehalten, mit 6,45 kg n-Butylglykol versetzt und auf ca. 75°C abgekühlt. Anschließend wurden 14,9 kg Nonylphenolglycidylether zugegeben, worauf die Temperatur auf 90°C stieg.

Die Mischung wurde noch eine Stunde bei 90°C gehalten und dann mit 10,03 kg Butylglykol versetzt und abgekühlt. Der Feststoffgehalt der Lösung betrug 60 Gew.-%. 21,6 kg dieser Lösung wurden mit 29,33 kg Wasser, 1,59 kg 90 gew.-%iger Essigsäure gemischt und dann mit 0,7 kg eines handelsüblichen Entschäumers (Tristar Antifoam, Tristar Chemical Co.), 0,5 kg Ruß, 4,8 kg basisches Bleipigment, 6,75 kg China Clay, 32,48 kg Titandioxid (R 900) und 2,25 kg Dibutylzinnoxid versetzt. Diese Mischung wurde 30 min lang in einem schnell-laufenden Dissolverrührwerk gerührt und danach innerhalb einer Stunde in einer Mühle bis zu einer Hegmann-Feinheit von kleiner oder gleich 12 gemahlen. Die so erhaltene Paste wurde durch Zugabe von Wasser auf eine Viskosität von ca. 100 Pas eingestellt.

Herstellung des Elektrotauchbads

19,25 kg der wäßrigen Bindemitteldispersion wurden mit 25 kg entionisiertem Wasser und 20 g 30 gew.-%iger wäßriger Milchsäure vermischt. In diese Mischung wurden 5,73 kg der oben beschriebenen Pigmentpaste eingerührt. Der Festkörpergehalt des so erhaltenen Tauchbades betrug 20 Gew.-%.

Man ließ den Elektrotauchlack noch 5 Tage bei Raumtemperatur altern. Die Abscheidung der Lackfilme erfolgte während 120 sec bei 380 Volt und 27°C auf kathodisch geschalteten zinkphosphatierten Stahltafeln. Der abgeschiedene Naßfilm wurde mit entionisiertem Wasser nachgespült und während 20 min bei 165°C eingebrannt.

Die Eigenschaften der Lackfilme sind in Tabelle II aufgelistet.

Tabelle II

| Elektrotauchbad mit Harz nach Beispiel Nr. | VOC [g/l] | Schichtdicke [µm] | RI 1) [Nm] | ET 2) [mm] | SST 3) [mm] |
|---|---|---|---|---|---|
| 1 | 0,297 | 25,5 | >160 | 10,2 | 0,46 |
| 2 | 0,277 | 25,2 | 120 | 10,0 | 0,51 |
| 3 | 0,285 | 24,8 | 80 | 9,7 | 0,44 |
| 4 | 0,314 | 25,9 | 140 | 10,6 | 0,38 |
| 5 | 0,293 | 24,6 | 120 | 10,2 | 0,49 |
| Vgl.bsp. A | 0,51 | 22,3 | 40 | 9,6 | 0,79 |
| Vgl.bsp. B | 0,465 | 23,5 | < 10 | 8,4 | 0,78 |

1) Reverse Impact (Schlagtiefung); Bestimmung mit einem mandrel impact tester der Fa. Gardner nach ASTM D 2794

2) Erichsen-Tiefung nach DIN 53156

3) Salzsprühtest nach DIN 50021, 360 Stunden, Unterwanderung in mm

**Patentansprüche**

1. Bindemittelzubereitung für die Elektrotauchlackierung, enthaltend

   (A) ein kathodisch abscheidbares Kunstharz und

   (B) 0,5 bis 15 Gew.-%, bezogen auf (A), einer Verbindung mit einem Siedepunkt oberhalb von 140°C, welche mindestens eine Vinyl- oder Allylgruppe trägt, die nicht direkt an eine Carbonylgruppe gebunden ist.

2. Bindemittelzubereitung nach Anspruch 1, enthaltend als Komponente (B) Diallylphthalat.

3. Bindemittelzubereitung nach Anspruch 1, enthaltend als Komponente (B) Diethylenglykolmonovinylether.

4. Bindemittelzubereitung nach Anspruch 1, enthaltend als Komponente (B) den 1,4-Cyclohexandimethanolmonovinylether.

5. Bindemittelzubereitung nach einem der Ansprüche 1 bis 4, enthaltend zusätzlich einen Radikalstarter mit einer Zerfallstemperatur oberhalb von 85°C.

6. Wäßrige Dispersionen, enthaltend eine Bindemittelzubereitung gemäß einem der Ansprüche 1 bis 5.

7. Verwendung von wäßrigen Dispersionen gemäß Anspruch 6 in Elektrotauchlackierbädern.

8. Elektrotauchlackierbäder, enthaltend wäßrige Dispersionen gemäß Anspruch 6.

9. Mittels kathodischer Elektrotauchlackierung beschichteter Gegenstand, erhältlich unter Verwendung eines Elektrotauchlackierbades gemäß Anspruch 8.


**Claims**

1. Binder formulation for the electro-dipping process, containing

   (A) a cathodically depositable synthetic resin and
   (B) from 0.5 to 15% by weight, based on (A), of a compound which has a boiling point above 140°C and carries at least one vinyl or allyl group which is not directly bonded to a carbonyl group.

2. Binder formulation according to Claim 1, containing diallyl phthalate as component (B).

3. Binder formulation according to Claim 1, containing diethylene glycol monovinyl ether as component (B).

4. Binder formulation according to Claim 1, containing 1,4-cyclohexanedimethanol monovinyl ether as component (B).

5. Binder formulation according to any of Claims 1 to 4, additionally containing a free radical initiator having a decomposition temperature above 85°C.

6. Aqueous dispersions containing a binder formulation according to any of Claims 1 to 5.

7. Use of aqueous dispersions according to Claim 6 in electro-dipping baths.

8. Electro-dipping baths containing aqueous dispersions according to Claim 6.

9. Article coated by means of cathodic electro-dipping, obtainable using an electro-dipping bath according to Claim 8.


**Revendications**

1. Préparation de liant pour l'électrodéposition, contenant

(A) une résine synthétique susceptible d'être déposée à la cathode et

(B) de 0,5 à 0,15% en poids, par rapport à (A), d'un composé ayant un point d'ébullition au-dessus de 140°C, qui porte au moins un groupement vinyle ou allyle, qui n'est pas directement lié à un groupement carbonyle.

2. Préparation de liant selon la revendication 1, contenant en tant que composant (B) du phtalate de diallyle.

3. Préparation de liant selon la revendication 1, contenant en tant que composant (B) de l'éther monovinylique du diéthylèneglycol.

4. Préparation de liant selon la revendication 1, contenant en tant que composant (B) l'éther monovinylique du 1,4-cyclohexanediméthanol.

5. Préparation de liant selon l'une quelconque des revendications 1 à 4, contenant de plus un agent d'initiation radicalaire ayant une température de décomposition au-delà de 85°C.

6. Dispersions aqueuses, contenant une préparation de liant selon l'une quelconque des revendications 1 à 5.

7. Utilisation de dispersions aqueuses selon la revendication 6 dans des bains de laquage pour trempage électrophorétique.

8. Bains de laquage pour trempage électrophorétique, contenant des dispersions aqueuses selon la revendication 6.

9. Article revêtu à l'aide d'une électrodéposition cathodique, que l'on peut obtenir par utilisation d'un bain de laquage pour trempage électrophorétique selon la revendication 8.